# EUROPEAN PATENT APPLICATION

(11) **EP 1 635 561 A2**
(43) Date of publication of application: **15.03.2006**
(21) Application number: 05019187.3
(22) Date of filing: 03.09.2005
(51) Int. Cl.: H04N 5/50

(54) **Cable broadcast receiver and method of processing service information for the same**

(30) Priority: 08.09.2004 KR 2004071695
(71) Applicant: LG ELECTRONICS INC., Seoul (KR)
(72) Inventor: Kim, Bong Seok, Gangnam-gu Seoul (KR); Yun, Chang Sik, Daejeon (KR)
(74) Representative: Zech, Stefan Markus

(57) **Abstract**

A cable broadcast receiver includes a host device and a cable card which is detachably inserted into the host device. The cable card receives an OOB (out of band) signal from the host device and parses a new SI (service information) table from the OOB signal. The new SI table contains a first CRC (cyclic redundancy check) code. The host device includes a memory and a controller. The memory pre-stores a channel list which is generated based on a previous SI table containing a second CRC code. The controller receives the new SI table from the cable card, and updates the pre-stored channel list based on the new SI table when there is a difference between the first and second CRC codes. The previous and new SI tables may correspond to Profile 1 service information and may include SVCTs (short form virtual channel tables) or NITs (network information tables).

## Description

This application claims the benefit of the Korean Patent Application No. 10-2004-0071695, filed on September 8, 2004, which is hereby incorporated by reference as if fully set forth herein.

### BACKGROUND OF THE INVENTION

### Field of the Invention

The present invention relates to a cable program receiver, and more particularly, to a cable program receiver and a method of processing service information for the same. Although the present invention is suitable for a wide scope of applications, it is particularly suitable for receiving channel information through the service information (SI) and processing and managing the received channel information.

### Discussion of the Related Art

Cable television (TV) program receivers that are sold in North America include OpenCable Digital TVs and CableReady Digital TVs. In such cable TV program receivers, a CableCARD provided by a corresponding cable system operator (SO) should be inserted. The CableCARD may also be referred to as a Point Of Deployment (POD) module. Hereinafter, the both terminologies (i.e., POD module and CableCARD) will be used in the description of the related art. A main body in which the CableCARD is inserted is also referred to as a host. Once the CableCARD is inserted in the main body, the combined structure is referred to as the cable TV program receiver. The CableCARD is detachably inserted in a slot on the main body of the cable TV program receiver. Furthermore, a cable TV broadcast station that transmits cable broadcast programs or program and channel information may be referred to as one of a cable system operator (SO) head-end and a multiple system operator (MSO) head-end.

At this point, the CableCARD that is inserted in the cable TV program receiver is set to transmit the channel information received from the cable TV broadcast station to the host, so that the channel number preset from by the cable TY broadcast station is used. This standard is referred to as an SI standard, which is a Service Information Delivered Out-Of-Band for Digital Cable Television. Herein, the service information (SI) is delivered out-of-band through the CableCARD. The SI provides channel information for all serviced channels (e.g., frequency information, modulation mode, whether a channel is serviced or not, etc.) and also provides electronic program guide (EPG) information for all serviced channels. The SI further provides channel branding (e.g., channel name, channel number, etc.) for each broadcast corporation or company. The cable TV program receiver parses the SI so as to detect the channel information. Then, the cable TV program receiver refers to the detected channel information in order to create a cable channel list (or map).

### SUMMARY OF THE INVENTION

Accordingly, the present invention is directed to a cable program receiver and a method of processing service information for the same that substantially obviate one or more problems due to limitations and disadvantages of the related art.

An object of the present invention is to provide a cable program receiver and a method of processing service information for the same that can detect a change in channel information within the service information (SI) and update the cable channel list accordingly.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a cable broadcast receiver includes a cable card for receiving an out-of-band (OOB) signal and parsing a new service information (SI) table from the OOB signal, the new SI table containing a first cyclic redundancy check (CRC) code, and a host device coupled to the cable card, the host device including a memory for pre-storing a channel list generated based on a previous SI table containing a second CRC code, and a controller for receiving the new SI table from the cable card, wherein the controller updates the pre-stored channel list based on the new SI table when there is a difference between the first and second CRC codes. Herein, the previous and new SI tables may include short-form virtual channel tables (SVCTs). The previous and new SI tables may also include network information tables (NITs). And, the previous and new SI tables may correspond to Profile 1 service information.

In another aspect of the present invention, a method of processing service information for a cable broadcast receiver includes pre-storing a channel list in a memory, the channel list being generated based on a previous service information (SI) table containing a first cyclic redundancy check (CRC) code, receiving an out-of-band (OOB) signal and parsing a new service (SI) table from the OOB signal, the new table containing a second CRC code, and updating the pre-stored channel list based on the new SI table when there is a difference between the first and second CRC codes. Herein, the previous and new SI tables may be short-form virtual channel tables (SVCTs). The previous and new SI tables may also be network information tables (NITs). And, the previous and new SI tables may correspond to Profile 1 service information.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates examples of transmission tables supported for each SI profile;

FIG. 2 illustrates examples of descriptors supported for each SI profile;

FIG. 3 illustrates a syntax structure for a Short-form Virtual Channel Table (SVCT);

FIG. 4 illustrates a cable program receiver according to an embodiment of the present invention; and

FIG. 5 illustrates a method of processing service information (SI) according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts. In addition, although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meaning of each term lying within.

The present invention relates to detecting a change in channel information within the service information (SI) and updating an originally stored cable channel list in accordance with the change detected in the channel information. As an embodiment of the present invention, a cyclic redundancy checks (CRC) (i.e., an error prevention code) of at least one table within the SI is used to detect whether the channel information within the SI has been changed. The SI provides various profiles depending upon the type of service provided.

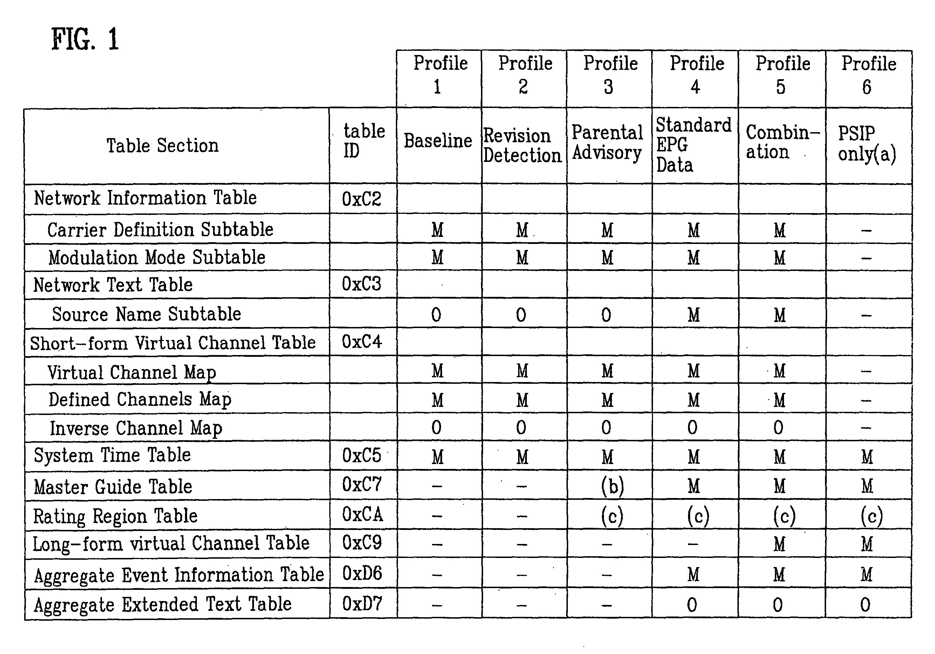

FIG. 1 illustrates a set of tables that is to be transmitted according to each SI profile. Examples for Profile 1 to Profile 6 are shown herein. Referring to FIG. 1, in case of Profile 1 a Network Information Table (NIT), a Short-form Virtual Channel Table (SVCT), and a System Time Table (STT) are transmitted. And, in case of Profile 4 an NIT, an SVCT, an STT, a Master Guide Table (MGT), and an Aggregate Event Information Table (AEIT) are transmitted. Depending upon the mode selected by a user, a receiving end parses the table information corresponding to at least one of Profile 1 to Profile 6, thereby creating a cable channel list or an EPG information.

As shown in FIG. 1, the tables required for creating the cable channel list are a Carrier Definition Subtable (CDS) and a Modulation Mode Subtable (MMS) of the NIT and a Virtual Channel Map (VCM) and a Defined Channel Map (DCM) of the SVCT. Herein, an Inverse Channel Map (ICM) of the SVCT is optional. The NIT provides information on a carrier frequency and a modulation mode. Herein, the CDS indicates a carrier frequency value of a physical channel, and the MMS indicates information on the modulation. The SVCT provides information on each serviced channel. Herein, the DCM indicates a virtual channel number for each of the serviced channels. And, the VCM provides mapping information between the transmission type of each serviced channel and the CDS and MMS of the NIT. More specifically, the cable program receiver refers to the CDS and MMS of the NIT and the VCM and DCM of the SVCT in order to create and store the cable channel list (or map).

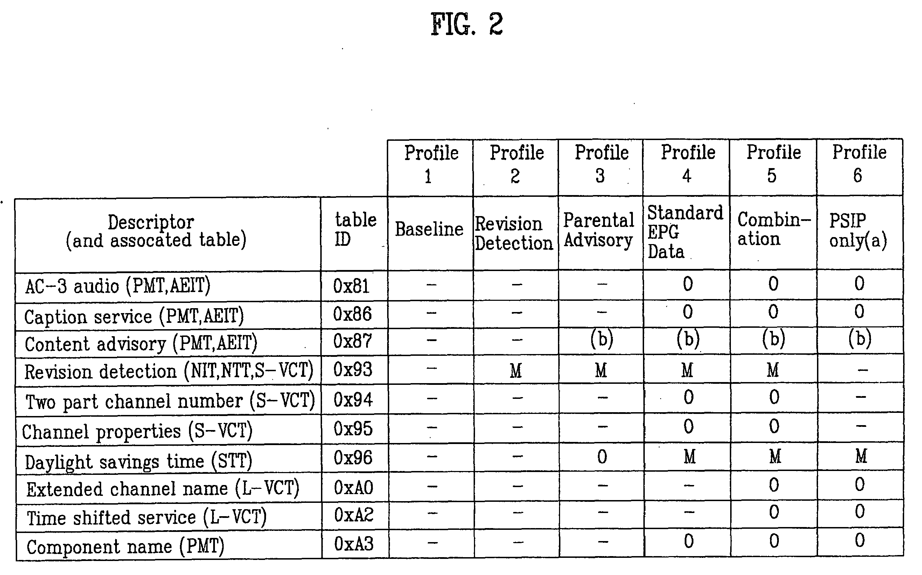

FIG. 2 illustrates examples of descriptors supported for each SI profile. Referring to FIG. 2, an AC-3 Audio descriptor is used in a Program Map Table (PMT) and an AEIT. The AC-3 Audio descriptor is optionally supported in Profile 4 to Profile 6. A Revision detection descriptor is used in the NIT, NTT, and SVCT and is mandatorily supported in Profile 2 to Profile 5. The Revision detection descriptor includes information such as a table version, a current section number, a last section number, and so on. In other words, the Revision detection descriptor indicates whether the table section including this descriptor is a new table section or not.

Therefore, in case of Profile 2 to Profile 6, when the Revision detection descriptor is parsed, the user can be informed as to whether the channel information has been changed. However, since the Revision detection descriptor does not exist in Profile 1, the user cannot be informed of the change in channel information, when the cable TV broadcast station changes the channel information included in the SI and transmits the changed channel information. Therefore, in case of Profile 1, even if the channel information is changed, the cable program receiver maintains the original channel list, thereby causing the channel list to contain incorrect information.

The SI within each table transmits a CRC code in order to check for any errors. At this point, when at least one set of information included in a table is changed, the CRC code value of the corresponding table also changes accordingly. The present invention uses the CRC code in order to verify (or check) whether the channel information within the SI has changed and to update the original channel list, in case the channel information has been changed. The present invention may use a CRC code of at least one table among the plurality of table transmitted to Profile 1. The CRC code within the SVCT will be given as an example of the present invention. It is apparent that the present invention is not limited only to this example and that the CRC code within the NIT or other tables may also be used herein. Alternatively, the CRC code of a plurality of table associated with the channel information may also be used herein..

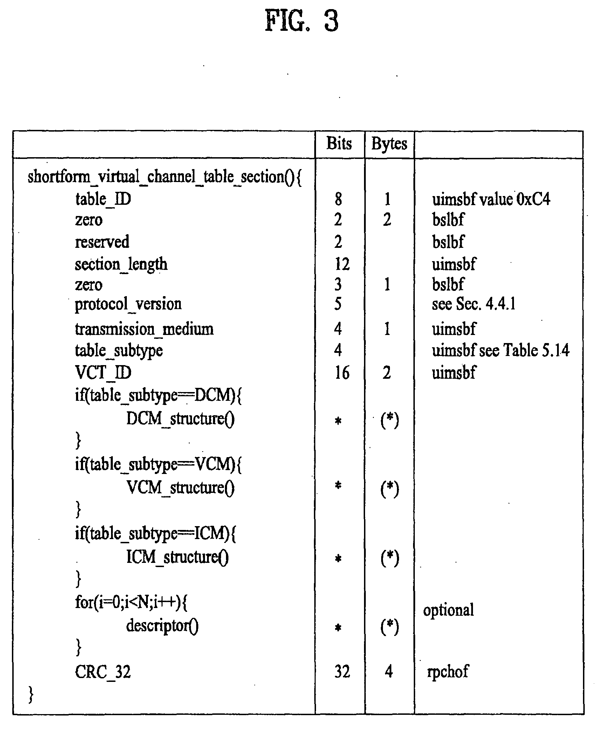

FIG. 3 illustrates a syntax structure for a Short-form Virtual Channel Table (SVCT). In the example shown in FIG. 3, the table_ID field value is set to 0xC4. A subtable type (table_subtype) field indicates three maps (i.e., DCM, VCM, ICM) that are transmitted to the SVCT section. If the subtable type field indicates the DCM, a DCM_structure() is performed. On the other hand, if the subtable type field indicates the VCM, a VCM_structure() is performed. The DCM represents a virtual channel number for each serviced channel. Starting from a first virtual channel number, a series of subsequent virtual channel numbers that are actually used is defined as one specific group. And, a next subsequent series of virtual channel numbers that are not used is defined as another (or subsequent) specific group. This process is repeated until all remaining virtual channel numbers are defined and specified as groups of used numbers and groups of unused numbers. The VCM transmits detailed information for each channel, such as channel number, channel type, channel specific ID, channel frequency index, whether scramble has been performed or not. The CRC code is assigned to the last 32 bits of the SVCT.

The CRC code is used to verify whether an error has occurred in the SVCT. When an error does not occur or when the contents of the table are not changed, the CRC code value is set to a constant value. For example, when the contents of the original SVCT and the contents of the new SVCT are identical, and when no error has occurred, the CRC code within each of the two SVCTs is identical to one another. In other words, if the contents of the original SVCT and the contents of the new SVCT become different from one another due to an error or change in the channel information, the CRC code of each SVCT also varies accordingly. Therefore, the present invention determines whether there has been a change in the channel information based on such difference in CRC codes.

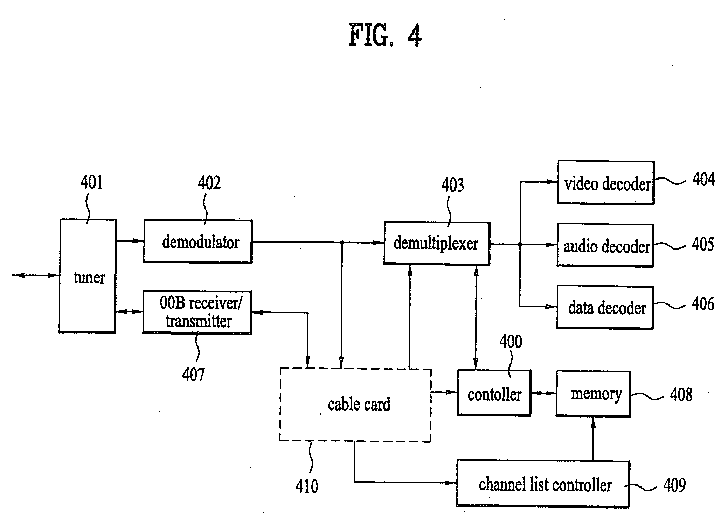

FIG. 4 illustrates a block diagram showing the structure of a cable program receiver according to an embodiment of the present invention. The cable card 410 shown in FIG. 4 is illustrated in dotted lines in order to indicate that the user can mount or dismount the cable card on or from a slot of the cable program receiver (i.e., the host). The host includes a tuner 401, a demodulator 402, a demultiplexer 403, a video decoder 404, an audio decoder 405, a data decoder 406, an out-of-band (OOB) receiver/transmitter 407, a memory 408, and a channel list controller 409. In the cable program receiver having the above-described structure, an A/V broadcast signal of a specific channel that is received as an in-band signal passes through the tuner 401 and the demodulator 402, so as to be tuned and demodulated, thereby being outputted in a transport stream form.

When the cable card 410 is inserted, the demodulated A/V broadcast signal is inputted to the cable card 410. Conversely, when the cable card 410 is not inserted, the demodulated A/V signal is directly inputted to the demultiplexer 403. When the A/V signal demodulated by the demodulator 402 is scrambled, the cable card 410 performs subscriber verification and descrambles the demodulated A/V signal, thereby outputting the signal to the demultiplexer 403. The A/V signal inputted to the demultiplexer 403 is a signal multiplexed to a transport packet form. A header portion of each packet includes a Packet Identifier (PID) indicating whether the contents of the packet are a video stream or an audio stream. The PID provides a means for demultiplexing the multiplexed signal. Accordingly, the demultiplexer 403 checks (or verifies) the PID in order to identify whether the current packet is a video signal, an audio signal, or a data signal. Therefore, the demultiplexer 403 refers to the PID of each transport packet, so as to separate the video signal, audio signal, and data signal from one another. The separated video and audio signals are outputted to the video decoder 404 and the audio decoder 405, respectively. Also, the separated data signal passes through the controller 400 so as to be stored in the memory 408. The data signal stored in the memory 408 is decoded from the data decoder 406 and displayed on a screen whenever required.

The video decoder 404 decodes a compression encoded video signal by using a reversed encoding process in order to recover the original video signal. Similarly, the audio decoder 405 decodes a compression encoded audio signal by using a reversed encoding process in order to recover the original audio signal. As an example of the present invention, an MPEG-2 decoder is the video decoder 404, and an AC-3 decoder is the audio decoder 405. Further, when the cable card 410 is inserted, information is organized in table forms in accordance with the SI standard. Then, channel and program guide information that are transmitted as OOB signals pass through the tuner 401 and the OOB transmitter/receiver 407, so as to be inputted to the cable card 410. The cable card 410 parses the SI tables and checks the parsed SI tables for any errors. Information of the tables having no errors therein are stored in the memory 408 through the controller 400 of the host. And, simultaneously, the SVCT information is also outputted to the channel list controller 409.

The controller 400 refers to table information (e.g., CDS and MMS of the NIT and VCM and DCM of the SVCT) transmitted from the cable card 410, so as to create a channel list and store the channel list in the memory 408. The CRC code value of the previous SVCT is stored in the channel list controller 409. However, when a new SVCT is inputted, the channel list controller 409 compares the originally stored CRC code of the previous SVCT with the CRC code value of the new SVCT, so as to verify whether the two CRC code values are identical to one another or not. If the two CRC code values are identical to one another, the channel list controller 409 determines that the channel information has not been changed. However, if the two CRC code values are different from one another, the channel list controller 409 determines that the channel information has been changed. Even when the contents of a single bit are different between the previous SVCT and the new SVCT, the CRC code value for each SVCT becomes different.

When the two CRC code values are identical to one another, the originally stored CRC code maintains its original value. Conversely, when the two CRC code values are different from one another, the originally stored CRC code value is updated with the new CRC code value. Furthermore, when the two CRC code values are identical to one another, the memory 408 maintains the same original channel list. On the other hand, when the two CRC code values are different from one another, the channel list controller 409 refers to the new table information, e.g., the new SVCT and NIT, so as to update the channel list stored in the memory 408.

The example of the channel list controller 409 using the CRC code of the SVCT in order to verify and determine whether the channel information has been changed is only an embodiment of the present invention. In another embodiment of the present invention, the channel list controller 409 may use the CRC code of the NIT or the CRC code of all of the tables required for creating the channel list, so as to verify and determine whether there has been a change in the channel information. For example, it is determined that the channel information has been changed, when the CRC code within the SVCT or the CRC code within the NIT is changed. At this point, the channel list controller 409 may use the CRC code for all profiles in order to verify and determine whether the channel information has been changed or not. Alternatively, the channel list controller 409 may use the CRC code for only Profile 1 in order to verify and determine whether the channel information has been changed or not.

In order to check to which profile the transmitted table corresponds, a receiving end verifies the tables that must be included in each specific Profile. For example, the tables that must be included in Profile 2 are NIT, SVCT, and STT. And, the tables that must be included in Profile 4 are NIT, NTT, SVCT, STT, MGT, and AEIT. Therefore, when the tables within the received SI includes NIT, NTT, SVCT, STT, MGT, and AEIT, the SI received from the cable TV broadcast station corresponds to Profile 4. The tables that must be included in Profile 1 are identical to those that must be included in Profile 2. In this case, in order to determine to which Profile (i.e., either Profile 1 or Profile 2) the received SI corresponds, it must be determined whether a Revision detection descriptor is included in at least one of the NIT, NTT, and SVCT tables. More specifically, if the Revision detection descriptor is not included in any one of the tables, then the received SI corresponds to Profile 1. Conversely, if the Revision detection descriptor is included in at least one of the tables, then the received SI corresponds to Profile 2. Accordingly, the channel list controller 409 may receive all table information within the SI. And, the controller 400 may function identically as the channel list controller 409. This is an option that may be chosen by the designer of the cable program receiver according to the present invention. Therefore, the present invention will not be limited only to the example given in this embodiment.

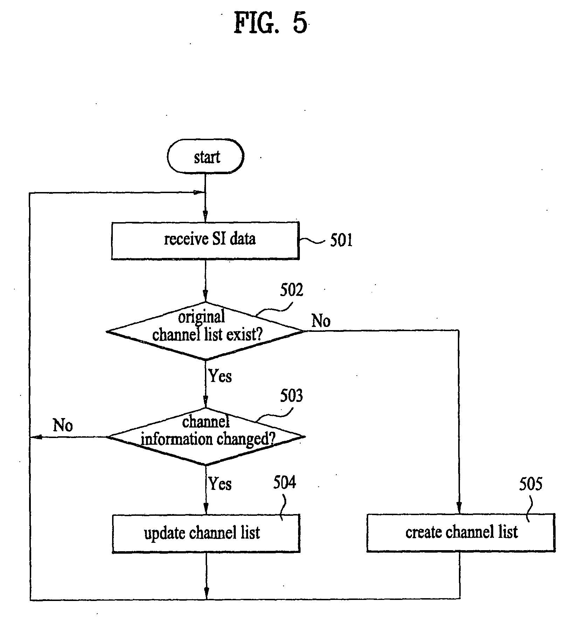

FIG. 5 illustrates a method of processing service information (SI) according to an embodiment of the present invention. An example of the operations associated with the channel list performed by the host is described herein. More specifically, when the SI data is received (S501), the host determines whether a channel list exists in the memory 408 (S502). Then, when the host determines in Step 502 that the channel list does not exist in the memory 408, the host refers to the table information associated with the channels and included in the SI, so as to create a channel list and store the created channel list in the memory 408 (S505). Alternatively, when the host determines in Step 502 that the channel list exists in the memory 408, the host determines whether the channel information included in the SI has been changed (S503).

In case of Profile 1, the host uses the CRC code of at least one table associated with the channels and included in the SI, so as to determine whether the channel information has been changed. In case of Profile 2 to Profile 6, the host may either use the CRC code, as described in the case of Profile 1, or use the Revision detection descriptor. When the host determines that the channel information has not been changed in Step 503, the host maintains the channel list originally stored in the memory 408. However, when the host determines that there has been a change in the channel information, the host refers to the table information within the SI data received in Step 501, so as to update the channel list stored in the memory 408.

As described above, the cable program receiver and the method of processing service information (SI) for the same according to the present invention have the following advantages. The present invention uses the CRC code of at least one table included in the SI in order to detect any change in the channel information transmitted from the cable TV broadcast station and to update the originally stored channel list in case the channel information has been changed. Thus, the present invention can prevent the channel list from indicating incorrect information.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A cable broadcast receiver comprising:
a cable card for receiving an out-of-band (OOB) signal and parsing a new service information (SI) table from the OOB signal, the new SI table containing a first cyclic redundancy check (CRC) code; and
a host device coupled to the cable card, the host device comprising:
a memory for pre-storing a channel list generated based on a previous SI table containing a second CRC code; and
a controller for receiving the new SI table from the cable card, wherein the controller updates the pre-stored channel list based on the new SI table when there is a difference between the first and second CRC codes.

2. The cable broadcast receiver of claim 1, wherein the cable card is detachably coupled to the host device.

3. The cable broadcast receiver of claim 1, wherein the previous and new SI tables include short-form virtual channel tables (SVCTs).

4. The cable broadcast receiver of claim 1, wherein each SVCT contains at least one of a virtual channel map (VCM) and a defined channel map (DCM).

5. The cable broadcast receiver of claim 4, wherein each SVCT table further contains an inverse channel map (ICM).

6. The cable broadcast receiver of claim 1, wherein the previous and new SI tables include network information tables (NITs) .

7. The cable broadcast receiver of claim 6, wherein each NIT contains at least one of a carrier definition sub-table (CDS) and a modulation mode sub-table (MMS).

8. The cable broadcast receiver of claim 1, wherein the controller stores the first CRC code when there is a difference between the first and second CRC codes.

9. The cable broadcast receiver of claim 1, wherein the previous and new SI tables correspond to Profile 1 service information.

10. The cable broadcast receiver of claim 1, wherein the controller identifies the new SI table as Profile 1 service . information when the new SI table contains no revision detection descriptor.

11. A method of processing service information for a cable broadcast receiver, the method comprising:
pre-storing a channel list in a memory, the channel list being generated based on a previous service information (SI) table containing a first cyclic redundancy check (CRC) code;
receiving an out-of-band (OOB) signal and parsing a new service (SI) table from the OOB signal, the new table containing a second CRC code; and
updating the pre-stored channel list based on the new SI table when there is a difference between the first and second CRC codes.

12. The method of claim 11, wherein the previous and new SI tables are short-form virtual channel tables (SVCTs).

13. The method of claim 12, wherein each SVCT contains at least one of a virtual channel map (VCM) and a defined channel map (DCM).

14. The method of claim 13, wherein each SVCT table further contains an inverse channel map (ICM).

15. The method of claim 11, wherein the previous and new SI tables are network information tables (NITs).

16. The method of claim 15, wherein each NIT contains at least one of a carrier definition sub-table (CDS) and a modulation mode sub-table (MMS).

17. The method of claim 11, further comprising storing the second CRC code for future use when there is a difference between the first and second CRC codes.

18. The method of claim 11, wherein the previous and new SI tables correspond to Profile 1 service information.

19. A cable broadcast receiver comprising:
a memory for pre-storing a channel list generated based on a group of previous service information (SI) tables, each previous SI table containing a cyclic redundancy check (CRC) code;
a point-of-deployment (POD) module for receiving an out-of-band (OOB) signal and parsing a group of new SI tables from the OOB signal, each new SI table containing a CRC code; and
a controller for receiving the group of new SI tables from the POD module, wherein the controller updates the pre-stored channel list based on the group of new SI tables when there is a difference between at least one of the CRC code included in the new SI tables and a corresponding CRC code included in the previous SI tables.

20. The cable broadcast receiver of claim 19, wherein the group of new SI tables includes a short-form virtual channel table (SVCT) and a network information table (NIT).

21. The cable broadcast receiver of claim 19, wherein the group of new SI tables corresponds to Profile 1 service information.

22. A method of processing service information for a cable broadcast receiver, the method comprising:
pre-storing a channel list in a memory, the channel list being generated based on a group of previous service information (SI) tables, each previous SI table containing a cyclic redundancy check (CRC) code;
receiving an out-of-band (OOB) signal and parsing a group of new SI tables from the OOB signal, each new SI table containing a CRC code; and
updating the pre-stored channel list based on the group of new SI tables when there is a difference between at least one of the CRC code included in the new SI tables and a corresponding CRC code included in the previous SI tables.

23. The method of claim 22, wherein the group of new SI tables includes a short-term virtual channel table (SVCT) and a network information table (NIT).

24. The method of claim 22, wherein the group of new SI tables corresponds to Profile 1 service information.
